# EUROPEAN PATENT APPLICATION

(11) **EP 4 730 287 A1**
(43) Date of publication of application: **22.04.2026**
(21) Application number: 23958769.4
(22) Date of filing: 29.12.2023
(51) Int. Cl.: G07C 9/00

(54) **PASSWORD ERASING METHOD FOR VEHICLE-MOUNTED CODED LOCK, APPARATUS, DEVICE AND STORAGE MEDIUM**

(30) Priority: 16.11.2023 CN 202311542255
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: WANG, Cui, Hangzhou, Zhejiang 310051 (CN); JIANG, Hongbing, Hangzhou, Zhejiang 310051 (CN); DING, Jianze, Hangzhou, Zhejiang 310051 (CN); HAN, Yong, Hangzhou, Zhejiang 310051 (CN); CHEN, Shengchao, Hangzhou, Zhejiang 310051 (CN); LIU, Donghui, Hangzhou, Zhejiang 310051 (CN); WU, Jiangcai, Hangzhou, Zhejiang 310051 (CN); KANG, Zhiwen, Hangzhou, Zhejiang 310051 (CN)
(74) Representative: Boult Wade Tennant LLP
(86) International application number: PCT/CN2023/143037
(87) International publication number: WO 2025/102502

(57) **Abstract**

The present application provides a method for clearing a password of a vehicle-mounted coded lock, an apparatus, a device and a storage medium. The method includes: activating a card reader in response to a user triggering a password-forgotten component; obtaining first near field communication information, where the first near field communication information is information pre-stored inside a first near field communication card and then collected by the card reader, the first near field communication information includes a first target identification corresponding to the first near field communication card, and the first near field communication card belongs to a target near field communication card; determining a first verification result of the first near field communication card based on the first target identification; clearing a pre-stored correct password corresponding to the coded lock based on the first verification result being verification passed, and unlocking the coded lock, where the coded lock is mounted on a vehicle. The present application can improve unlocking efficiency and reduce unlocking complexity.

## Description

This application claims priority to Chinese Patent Application No. 2023115422556, filed to China National Intellectual Property Administration on November 16, 2023 and entitled "METHOD FOR CLEARING PASSWORD OF VEHICLE-MOUNTED CODED LOCK, APPARATUS, DEVICE AND STORAGE MEDIUM", which is hereby incorporated by reference in its entirety.

### TECHNICAL FIELD

The present application relates to information security technologies and, in particular, to a method for clearing a password of a vehicle-mounted coded lock, an apparatus, a device and a storage medium.

### BACKGROUND

With an increasing awareness of users to protect private items when using vehicles, coded lock boxes can be installed on the vehicles for placing private items, and the coded lock boxes are equipped with coded locks. When a user needs to take private items from a coded lockbox, the coded lock needs to be unlocked.

In the prior art, a user inputs a password of the coded lock through a central control screen of a vehicle. If the password is correct, the coded lock is unlocked; if the password is incorrect, the user continues to input until a number of inputting occurrences reaches a maximum threshold and then the password is locked and the coded lock cannot be unlocked. The user needs to drive the vehicle to a vehicle maintenance shop or use an after-sales diagnostic instrument to clear the password before the coded lock can be unlocked.

However, driving the vehicle to the vehicle maintenance shop or using the after-sales diagnostic instrument to clear the password delays the user from taking private items, and the entire process is very cumbersome, resulting in low unlocking efficiency and increased complexity.

### SUMMARY

The present application provides a method for clearing a password of a vehicle-mounted coded lock, an apparatus, a device and a storage medium, which are used to solve the problems of delaying the user from taking private items, cumbersome process, low unlocking efficiency and increased complexity caused by driving the vehicle to the vehicle maintenance shop or using the after-sales diagnostic instrument to clear the password.

In a first aspect, the present application provides a method for clearing a password of a vehicle-mounted coded lock, where the method includes:
activating a card reader in response to a user triggering a password-forgotten component;
obtaining first near field communication information, where the first near field communication information is information pre-stored inside a first near field communication card and then collected by the card reader, the first near field communication information includes a first target identification corresponding to the first near field communication card, and the first near field communication card belongs to a target near field communication card;
determining a first verification result of the first near field communication card based on the first target identification; and
clearing a pre-stored correct password corresponding to the coded lock based on the first verification result being verification passed, and unlocking the coded lock, where the coded lock is mounted on a vehicle.

In an implementation, if there is one target near field communication card;
the determining the first verification result of the first near field communication card based on the first target identification includes:
obtaining a preset identification corresponding to a pre-stored preset near field communication card;
if the first target identification matches the preset identification, determining that the first verification result of the first near field communication card is verification passed; and
if the first target identification does not match the preset identification, determining that the first verification result of the first near field communication card is verification failed.

In an implementation, the clearing the pre-stored correct password corresponding to the coded lock based on the first verification result being verification passed includes:
in response to the first verification result being verification passed, generating a password clearing instruction, and sending the password clearing instruction to a vehicle-mounted host to instruct the vehicle-mounted host to obtain the pre-stored correct password corresponding to the coded lock and clear the correct password.

In an implementation, if there are two target near field communication cards and the target near field communication cards further include a second near field communication card;
the determining the first verification result of the first near field communication card based on the first target identification includes:
obtaining a pre-stored preset identification set, where the preset identification set includes preset identifications corresponding to two preset near field communication cards;
if the first target identification matches one of the preset identifications, determining that the first verification result of the first near field communication card is verification passed; and
if the first target identification does not match any of the preset identifications, determining that the first verification result of the first near field communication card is verification failed.

In an implementation, the clearing the pre-stored correct password corresponding to the coded lock based on the first verification result being verification passed includes:
in response to the first verification result being verification passed, continuing to obtain second near field communication information, where the second near field communication information includes a second target identification corresponding to the second near field communication card; and
determining a second verification result of the second near field communication card based on the second target identification, clearing the pre-stored correct password corresponding to the coded lock based on the second verification result and unlocking the coded lock.

In an implementation, the determining the second verification result of the second near field communication card based on the second target identification includes:
obtaining an other unmatched preset identification in the preset identification set;
if the second target identification matches the other unmatched preset identification, determining that the second verification result of the second near field communication card is verification passed; and
if the second target identification does not match the other unmatched preset identification, determining that the second verification result of the second near field communication card is verification failed.

In an implementation, the clearing the pre-stored correct password corresponding to the coded lock based on the second verification result and unlocking the coded lock includes:
in response to the second verification result being verification passed, generating a password clearing instruction, and sending the password clearing instruction to the vehicle-mounted host to instruct the vehicle-mounted host to obtain the pre-stored correct password corresponding to the coded lock and clear the correct password.

In an implementation, the method further includes:
in response to the first verification result being verification invalid or the second verification result being verification invalid, continuing to obtain the first near field communication information or the second near field communication information, and stopping obtaining the first near field communication information or the second near field communication information when the first verification result or the second verification result is verification passed or verification failed, or when the number of the verification invalid occurrences exceeds a preset invalid number, where the first verification result being verification invalid means that the first near field communication information or the second near field communication information is not obtained.

In a second aspect, the present application provides an apparatus for clearing a password of a vehicle-mounted coded lock, where the apparatus includes:
an activating module, configured to activate a card reader in response to a user triggering a password-forgotten component;
an obtaining module, configured to obtain first near field communication information, where the first near field communication information is information pre-stored inside a first near field communication card and then collected by the card reader, the first near field communication information includes a first target identification corresponding to the first near field communication card, and the first near field communication card belongs to a target near field communication card;
a determining module, configured to determine a first verification result of the first near field communication card based on the first target identification; and
a clearing module, configured to clear a pre-stored correct password corresponding to the coded lock based on the first verification result being verification passed and unlock the coded lock, where the coded lock is mounted on a vehicle.

In a third aspect, the present application provides a near field communication device, including: a processor, a memory and a card reader that are communicatively connected to the processor;
where the memory stores computer-executable instructions, the card reader is configured to collect information pre-stored inside a target near field communication card; and
the processor executes the computer-executable instructions stored in the memory to implement the method according to the first aspect or any of the implementations thereof.

In a fourth aspect, the present application provides a computer-readable storage medium, where the computer-readable storage medium stores computer-executable instructions that, when executed by a processor, are used to implement the method according to the first aspect or any of the implementations thereof.

In a fifth aspect, the present application provides a computer program product, including a computer program that, when executed by a processor, implements the method according to the first aspect or any of the implementations thereof.

The present application provides a method for clearing a password of a vehicle-mounted coded lock, an apparatus, a device and a storage medium. In the present application, the clearing apparatus activates a card reader in response to a user triggering a password-forgotten component, then the clearing apparatus obtains first near field communication information, where the first near field communication information is information pre-stored inside a first near field communication card and then collected by the card reader and includes a first target identification corresponding to the first near field communication card, and the first near field communication card belongs to a target near field communication card. Then the clearing apparatus determines a first verification result of the first near field communication card based on the first target identification, thereby clearing a pre-stored correct password corresponding to the coded lock based on the first verification result being verification passed and unlocking the coded lock, where the coded lock is mounted on a vehicle. The present application realizes clearing the correct password by using the target near field communication card so as to unlock the coded lock. In the present application, the user can unlock the coded lock by using the target near field communication card by himself/herself, which is more convenient and faster than driving the vehicle to a vehicle maintenance shop or using an after-sales diagnostic instrument in the prior art. Therefore, the problem that the user cannot unlock the coded lock currently can be solved in a timely manner, so that the unlocking efficiency and convenience are improved in the present application.

### BRIEF DESCRIPTION OF DRAWINGS

The accompanying drawings, which are incorporated in and constitute a part of the specification, illustrate embodiments consistent with the present application and serve to explain the principles of the present application together with the specification.
FIG. 1 is an application scenario diagram of a method for clearing a password of a vehicle-mounted coded lock provided by the present application.
FIG. 2 is a schematic flowchart of a method for clearing a password of a vehicle-mounted coded lock provided in Embodiment 1.
FIG. 3 is a schematic flowchart of a method for clearing a password of a vehicle-mounted coded lock provided in Embodiment 2.
FIG. 4 is a schematic flowchart of a method for clearing a password of a vehicle-mounted coded lock provided in Embodiment 4.
FIG. 5 is a schematic flowchart of a method for clearing a password of a vehicle-mounted coded lock provided in Embodiment 6.
FIG. 6 is a schematic interaction diagram provided in Embodiment 9.
FIG. 7 is a schematic diagram of a vehicle system provided in Embodiment 9.
FIG. 8 is a schematic diagram of an apparatus for clearing a password of a vehicle-mounted coded lock provided in Embodiment 10.
FIG. 9 is a schematic structural diagram of a near field communication device provided in Embodiment 11.

Through the above accompanying drawings, specific embodiments of the present application have been shown, which will be described in more detail below. These drawings and textual descriptions are not intended to limit the concept scope of the application in any way, but to illustrate the concept of the present application to those skilled in the art by referring to specific embodiments.

### DESCRIPTION OF EMBODIMENTS

Exemplary embodiments will be described in detail herein, examples of which are illustrated in the accompanying drawings. Where the following description refers to the accompanying drawings, the same numerals in different drawings refer to the same or similar elements unless otherwise indicated. The implementations described in the following exemplary embodiments do not represent all implementations consistent with the present application. Instead, they are merely examples of apparatuses and methods consistent with some aspects of the present application as detailed in the appended claims.

First, the nouns involved in the present application are explained:
A near field communication card: refers to a Near Field Communication (Near Field Communication, abbreviated as NFC) card, which is a card equipped with short-range high-frequency wireless communication technology. Information exchange between the near field communication card and the card reader can be realized when they are effectively removed.

In the prior art, a user inputs a password of a coded lock through a central control screen of a vehicle. If the password is correct, the coded lock is unlocked; if the password is incorrect, the user continues to input until the number of inputting occurrences reaches a maximum threshold and then the password is locked and the coded lock cannot be unlocked. The user needs to drive the vehicle to a vehicle maintenance shop or use an after-sales diagnostic instrument to clear the password before the coded lock can be unlocked. If the user uses the after-sales diagnostic instrument by himself/herself, the user needs certain diagnostic capabilities and operation capabilities to unlock the coded lock.

However, driving the vehicle to the vehicle maintenance shop or using the after-sales diagnostic instrument to clear the password delays the user from taking private items, and the entire process is very cumbersome, resulting in low unlocking efficiency and increased complexity.

To solve the deficiencies in the prior art, the inventors of the present scheme have designed a new scheme through creative research. The present scheme provides a method for clearing a password of a vehicle-mounted coded lock. To solve the low unlocking efficiency and increased complexity in the prior art, the present scheme proposes that the clearing apparatus activates a card reader in response to a user triggering a password-forgotten component, and then obtains first near field communication information, where the first near field communication information is information pre-stored inside a first NFC card and then collected by the card reader, the first near field communication information includes a first target identification corresponding to the first near field communication card. Then, the clearing apparatus determines a first verification result of the first near field communication card based on the first target identification, and further clears a pre-stored correct password corresponding to the coded lock based on the first verification result being verification passed and unlocks the coded lock. In the present scheme, the correct password can be cleared in a timely manner and the coded lock can be unlocked by using the target near field communication card, so that the user can unlock the coded lock conveniently and quickly, thereby improving the unlocking efficiency and convenience.

The application scenario of the method for clearing a password of a vehicle-mounted coded lock, an apparatus, a device and a storage medium provided by the present application is introduced below.

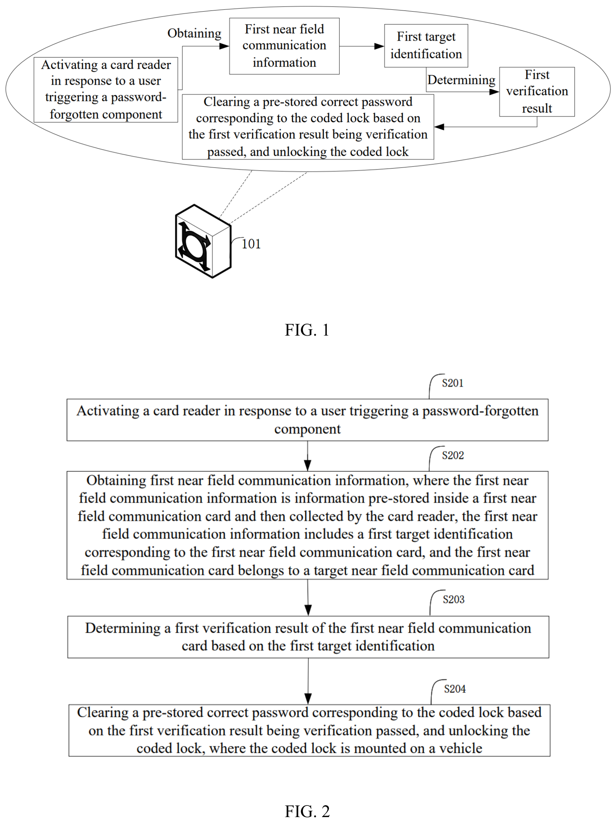

FIG. 1 is an application scenario diagram of a method for clearing a password of a vehicle-mounted coded lock provided by the present application. As shown in FIG. 1, the application scenario diagram includes a near field communication device 101.

In this scenario, the near field communication device 101 includes a card reader. The near field communication device 101 includes a clearing apparatus.

Specifically, the near field communication device 101 activates the card reader in response to a user triggering a password-forgotten component. Then the near field communication device 101 obtains first near field communication information, where the first near field communication information is information pre-stored inside a first near field communication card and then collected by the card reader, the first near field communication information includes a first target identification corresponding to the first near field communication card.

Further, the near field communication device 101 determines a first verification result based on the first target identification, and then clears a pre-stored correct password corresponding to the coded lock based on the first verification result being verification passed and unlocks the coded lock.

It should be noted that the vehicle in the present application includes a central control screen, a vehicle-mounted host, a near field communication device and other devices.

It should be noted that the target near field communication cards in the present application may include multiple cards, which enables more targeted correct password clearing. The more target near field communication cards, the more secure it is, but the more target near field communication cards, the longer it takes to clear the correct password and unlock the coded lock. Therefore, two near field communication cards can be selected, which not only ensures accuracy but also improves unlocking efficiency.

It should be noted that the user information (including but not limited to user device information, user personal information, etc.) and data (including but not limited to data used for analysis, stored data, displayed data, etc.) involved in the present application are all information and data authorized by the user or fully authorized by all parties, and the collection, use and processing of relevant data need to comply with relevant laws, regulations and standards, and corresponding operation entrances are provided for the user to choose to authorize or refuse.

The method for clearing a password of a vehicle-mounted coded lock provided by the present application aims to solve the above technical problems in the prior art.

The technical solutions of the present application and how the technical solutions of the present application solve the above technical problems will be described in detail below with specific embodiments. The following specific embodiments can be combined with each other, and the same or similar concepts or processes may not be repeated in some embodiments. The embodiments of the present application will be described below with reference to the accompanying drawings.

### Embodiment 1

The executive subject of the present application is an apparatus for clearing a password of a vehicle-mounted coded lock (hereinafter referred to as the clearing apparatus), which is set in a near field communication device.

FIG. 2 is a schematic flowchart of a method for clearing a password of a vehicle-mounted coded lock provided in Embodiment 1. As shown in FIG. 2, it specifically includes the following steps.

S201, activating a card reader in response to a user triggering a password-forgotten component.

The password-forgotten component refers to a component provided for the user who forgets the password of the coded lock.

The card reader refers to a device that collects information of a card placed on or inserted into the card reader through the near field communication technology.

In an implementation, the user inputs the target password of the coded lock on the central control screen of the vehicle, and the vehicle-mounted host determines that the target password is inconsistent with the correct password, thereby judging that the target password input by the user is wrong, and displays an error prompt on the central control screen, where the error prompt includes error prompt information, a password input box and a password-forgotten component. Then the user clicks the password-forgotten component on the central control screen to trigger the password-forgotten component, and then the clearing apparatus activates the card reader. Specifically, when the user clicks the password-forgotten component on the central control screen, the vehicle-mounted host receives a message that the user triggers the password-forgotten component, and sends the message that the user triggers the password-forgotten component to the clearing apparatus, so that the clearing apparatus determines that the user triggers the password-forgotten component.

In another implementation, the user clicks the password-forgotten component on the central control screen, and the central control screen directly sends a message that the user triggers the password-forgotten component to the clearing apparatus, so that the clearing apparatus determines that the user triggers the password-forgotten component.

It should be noted that the card reader may be mounted in the clearing apparatus or independent of the clearing apparatus, which is not limited herein.

S202, obtaining first near field communication information, where the first near field communication information is information pre-stored inside a first near field communication card and then collected by the card reader, the first near field communication information includes a first target identification corresponding to the first near field communication card, and the first near field communication card belongs to a target near field communication card.

In an implementation, the user places the first near field communication card on the card reader and makes the first near field communication card in good contact with the card reader, so that the card reader can collect the information pre-stored inside the first near field communication card, and thus the clearing apparatus can obtain the first near field communication information.

The first near field communication information includes a first target identification corresponding to the first near field communication card.

The information pre-stored inside the first near field communication card includes the corresponding first target identification.

The target near field communication card includes the first near field communication card or other near field communication cards.

It should be noted that the card reader includes a Wireless Phone Charger (Wireless Phone Charger, abbreviated as WPC) module. The WPC module can collect the information pre-stored inside the target near field communication card through a card reading module in the target near field communication card.

It should be noted that the target near field communication card is equipped with the card reading module. When the target near field communication card is placed on the card reader, the card reading module in the target near field communication card communicates with the WPC module through a controller area network signal, so that the WPC module can read the information pre-stored in the target near field communication card (including the target identification corresponding to the target near field communication card), so that the card reader collects the information pre-stored inside the target near field communication card, and the card reader sends the information pre-stored inside the target near field communication card to the clearing apparatus through the controller area network signal.

S203, determining a first verification result of the first near field communication card based on the first target identification.

Further, the clearing apparatus determines the first verification result of the first near field communication card according to the first target identification and the pre-stored preset identification or preset identification set. The preset identification set includes at least two preset identifications.

The first verification result being verification passed means that the first target identification matches the pre-stored preset identification.

The first verification result being verification failed means that the first target identification does not match the pre-stored preset identification.

S204, clearing a pre-stored correct password corresponding to the coded lock based on the first verification result being verification passed, and unlocking the coded lock, where the coded lock is mounted on a vehicle.

The correct password refers to the correct password of the coded lock pre-stored in a vehicle-mounted host. The vehicle-mounted host is a device in the vehicle.

It should be noted that the correct passwords corresponding to different vehicles may be different and can be customized by the user, which is not limited herein.

The coded lock is mounted on a coded lock box. The coded lock box can be used to place private items or important items, and the coded lock box is used to protect private items or important items.

In an implementation, in response to the first verification result being verification passed, the clearing apparatus causes the vehicle-mounted host to clear the pre-stored correct password corresponding to the coded lock and unlocks the coded lock at the same time.

Alternatively, in an implementation, in response to the first verification result being verification passed, the clearing apparatus continues to obtain the information pre-stored inside an other target near field communication card (that is, including the target identification corresponding to the other target near field communication card), and determines an other verification result based on the target identification corresponding to the other target near field communication card. If each of the other verification results is verification passed, the clearing apparatus causes the vehicle-mounted host to clear the pre-stored correct password corresponding to the coded lock and unlocks the coded lock at the same time.

This embodiment provides a method for clearing a password of a vehicle-mounted coded lock. In the present application, a clearing apparatus activates a card reader in response to a user triggering a password-forgotten component, then the clearing apparatus obtains first near field communication information, which is the information pre-stored inside a first near field communication card and then collected by the card reader and includes a first target identification corresponding to the first near field communication card, where the first near field communication card belongs to a target near field communication card. Then the clearing apparatus determines a first verification result of the first near field communication card based on the first target identification, thereby clearing the pre-stored correct password corresponding to the coded lock based on the first verification result being verification passed, and unlocking the coded lock, which is mounted on a vehicle. The present application realizes clearing the correct password by using a target near field communication card to unlock the coded lock. In the present application, the user can unlock the coded lock by using the target near field communication card by himself/herself, which is more convenient and faster than driving the vehicle to a vehicle maintenance shop or using an after-sales diagnostic instrument in the prior art. Therefore, the problem that the user cannot unlock the coded lock currently can be solved in a timely manner, so that the unlocking efficiency and convenience are improved in the present application.

### Embodiment 2

This embodiment is a further refinement of Embodiment 1 above. In this embodiment, there is one target near field communication card.

It should be noted that there being one target near field communication card means that the target near field communication card is the first near field communication card.

This embodiment is an optional implementation of determining the first verification result of the first near field communication card based on the first target identification.

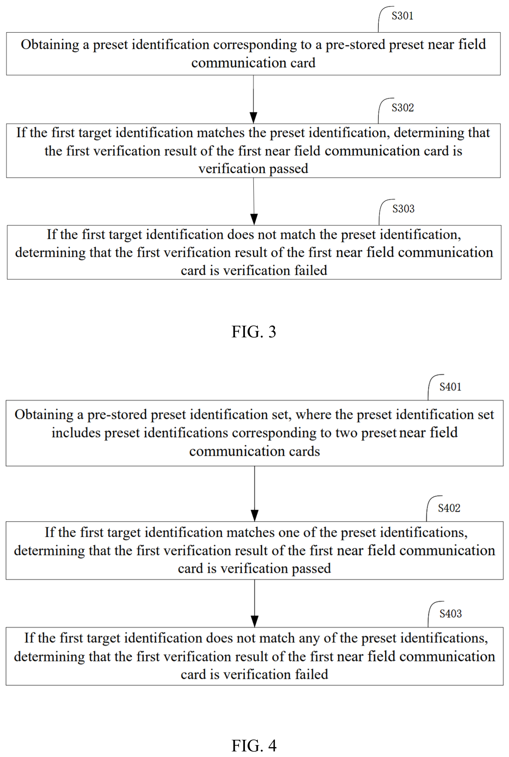

FIG. 3 is a schematic flowchart of a method for clearing a password of a vehicle-mounted coded lock provided in Embodiment 2. As shown in FIG. 3, the specific steps are as follows.

S301, obtaining a preset identification corresponding to a pre-stored preset near field communication card.

The preset near field communication card is pre-stored in a clearing apparatus or a vehicle-mounted host.

In an implementation, the clearing apparatus obtains the preset identification corresponding to a preset near field communication card from its own storage area.

In another implementation, the clearing apparatus sends an obtaining instruction to the vehicle-mounted host, so that the vehicle-mounted host receives the obtaining instruction, generates an obtaining response based on the preset identification corresponding to a preset near field communication card stored by itself, and sends the obtaining response to the clearing apparatus.

S302, if the first target identification matches the preset identification, determining that the first verification result of the first near field communication card is verification passed.

For example, if the first target identification is "213048" and the preset identification is also "213048", the clearing apparatus determines that the first target identification matches the preset identification, so the verification is passed, and the clearing apparatus further determines that the first verification result of the first near field communication card is verification passed. It should be noted that "213048" is only used to illustrate the present scheme and does not represent the identification in the actual situation.

S303, if the first target identification does not match the preset identification, determining that the first verification result of the first near field communication card is verification failed.

For example, if the first target identification is "213048" and the preset identification is "213058", the clearing apparatus determines that the first target identification does not match the preset identification, so the verification fails, and the clearing apparatus further determines that the first verification result of the first near field communication card is verification failed.

This embodiment provides a method for clearing a password of a vehicle-mounted coded lock. In this embodiment, the clearing apparatus obtains the preset identification corresponding to a pre-stored preset near field communication card, and then matches the preset identification with the first target identification, so that the first verification result of the first near field communication card (verification passed or verification failed) can be accurately determined.

### Embodiment 3

This embodiment is a further refinement of any of the above embodiments.

This embodiment is an optional implementation of clearing the pre-stored correct password corresponding to the coded lock based on the first verification result being verification passed.

In response to the first verification result being verification passed, generating a password clearing instruction, and sending the password clearing instruction to a vehicle-mounted host to instruct the vehicle-mounted host to obtain the pre-stored correct password corresponding to the coded lock and clear the correct password.

Further, in response to the first verification result being verification passed, the clearing apparatus generates a password clearing instruction, and then sends the password clearing instruction to a vehicle-mounted host, so as to instruct the vehicle-mounted host to obtain the correct password corresponding to the coded lock which is pre-stored inside the vehicle-mounted host after receiving the password clearing instruction, and instructs the vehicle-mounted host to clear the correct password.

It should be noted that after the vehicle-mounted host clears the correct password, the user can reset a new password according to the prompt on the central control screen.

This embodiment provides a method for clearing a password of a vehicle-mounted coded lock. In this embodiment, the clearing apparatus generates a password clearing instruction, so that the password clearing instruction can be sent to the vehicle-mounted host in a timely manner, and further the vehicle-mounted host can obtain the correct password in a timely manner and clear the correct password.

### Embodiment 4

This embodiment is a further refinement of any of the above embodiments. In this embodiment, there are two target near field communication cards, and the target near field communication cards further include a second near field communication card.

It should be noted that the target near field communication cards include the first near field communication card and the second near field communication card at this time.

This embodiment is an optional implementation of determining the first verification result of the first near field communication card based on the first target identification.

FIG. 4 is a schematic flowchart of a method for clearing a password of a vehicle-mounted coded lock provided in Embodiment 4. As shown in FIG. 4, the specific steps are as follows.

S401, obtaining a pre-stored preset identification set, where the preset identification set includes preset identifications corresponding to two preset near field communication cards.

In an implementation, the clearing apparatus obtains the pre-stored preset identification set from its own storage area, where the preset identification set includes preset identifications corresponding to the two preset near field communication cards. For example, assuming that the first preset identification is "213048" and the second preset identification is "519026".

In another implementation, the clearing apparatus sends an obtaining instruction to the vehicle-mounted host, so that the vehicle-mounted host receives the obtaining instruction, generates an obtaining response based on the preset identification set stored by itself, and sends the obtaining response to the clearing apparatus.

S402, if the first target identification matches one of the preset identifications, determining that the first verification result of the first near field communication card is verification passed.

For example, the clearing apparatus matches the first target identification with the two preset identifications in the preset identification set. If the first target identification is "213048", it is determined that the first target identification matches the first preset identification "213048", so that it is determined that the first target identification matches one of the preset identifications, and thus it is determined that the first verification result of the first near field communication card is verification passed.

S403, if the first target identification does not match any of the preset identifications, determining that the first verification result of the first near field communication card is verification failed.

For example, the clearing apparatus matches the first target identification with the two preset identifications in the preset identification set. If the first target identification is "214580", it is determined that the first target identification does not match any of the preset identifications (i.e., the first preset identification "213048" and the second preset identification "519026"), and thus it is determined that the first verification result of the first near field communication card is verification failed.

This embodiment provides a method for clearing a password of a vehicle-mounted coded lock. In this embodiment, if there are two target near field communication cards and the target near field communication cards further include a second near field communication card, the preset identification set is obtained and the first target identification is matched with the preset identification set, and the first verification result (verification passed or verification failed) is determined in a targeted manner according to different situations. If the first target identification matches one of the preset identifications, the first verification result of the first near field communication card is determined to be verification passed; if the first target identification does not match any of the preset identifications, the first verification result of the first near field communication is determined to be verification failed.

### Embodiment 5

This embodiment is a further refinement of any of the above embodiments, and this embodiment is an optional implementation of clearing the pre-stored correct password corresponding to the coded lock based on the first verification result being verification passed.

In response to the first verification result being verification passed, continuing to obtain second near field communication information, where the second near field communication information includes a second target identification corresponding to the second near field communication card; and determining a second verification result of the second near field communication card based on the second target identification, clearing the pre-stored correct password corresponding to the coded lock based on the second verification result and unlocking the coded lock.

Specifically, in response to the first verification result being verification passed, the clearing apparatus displays, on the central control screen, a prompt for placing the second near field communication card, so that the user places the prompt of the second near field communication card on the card reader. The card reader collects the information pre-stored inside the second near field communication card (i.e., the second near field communication information) through the above method, and sends or transmits it to the clearing apparatus, so that the clearing apparatus obtains the second near field communication information. The second near field communication information includes a second target identification corresponding to the second near field communication card.

Further, the clearing apparatus determines a second verification result of the second near field communication card based on the second target identification.

This embodiment provides a method for clearing a password of a vehicle-mounted coded lock. In this embodiment, for the case where the first verification result is verification passed, the second near field communication information is continuously obtained. Therefore, in this embodiment, the clearing of the correct password and the unlocking of the coded lock is not determined only by relying on a single one near field communication card, but for the sake of security, the second near field communication card is also used to clear the correct password.

### Embodiment 6

This embodiment is a further refinement of any of the above embodiments. This embodiment is an optional implementation of determining the second verification result of the second near field communication card based on the second target identification.

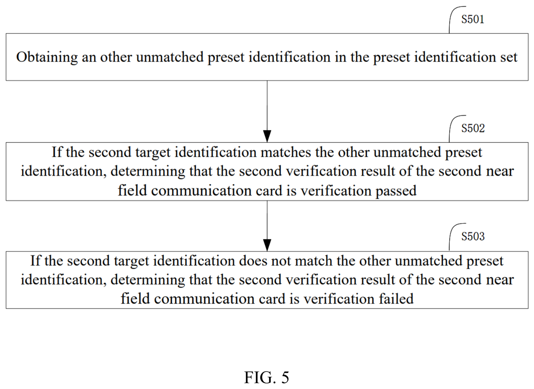

FIG. 5 is a schematic flowchart of a method for clearing a password of a vehicle-mounted coded lock provided in Embodiment 6. As shown in FIG. 5, the specific steps are as follows.

S501, obtaining an other unmatched preset identification in the preset identification set.

According to the above examples, assuming that the first target identification matches the first preset identification, then the other unmatched preset identification in the preset identification set is the second preset identification. For example, the second preset identification is "519026".

S502, if the second target identification matches the other unmatched preset identification, determining that the second verification result of the second near field communication card is verification passed.

Further, the clearing apparatus matches the second target identification with the second preset identification.

For example, assuming that the second target identification is "519026", it is determined that the second target identification matches the other unmatched preset identification (i.e., the second preset identification), and thus it is determined that the second verification result of the second near field communication card is verification passed.

S503, if the second target identification does not match the other unmatched preset identification, determining that the second verification result of the second near field communication card is verification failed.

For example, assuming that the second target identification is "518026", it is determined that the second target identification does not match the other unmatched preset identification (i.e., the second preset identification), and thus it is determined that the second verification result of the second near field communication card is verification failed.

This embodiment provides a method for clearing a password of a vehicle-mounted coded lock. In this embodiment, the clearing apparatus obtains an other unmatched preset identification in the preset identification set, matches the second target identification with the other unmatched preset identification, and determines the second verification result (verification passed or verification failed) in a targeted manner according to different matching situations. If the second target identification does not match the other unmatched preset identification, the clearing apparatus determines that the second verification result of the second near field communication card is verification failed; if the second target identification does not match the other unmatched preset identification, the clearing apparatus determines that the second verification result of the second near field communication card is verification failed.

### Embodiment 7

This embodiment is a further refinement of any of the above embodiments, and this embodiment is an optional implementation of clearing the pre-stored correct password corresponding to the coded lock based on the second verification result and unlocking the coded lock. The specific content is as follows.

In response to the second verification result being verification passed, generating a password clearing instruction, and sending the password clearing instruction to a vehicle-mounted host to instruct the vehicle-mounted host to obtain the pre-stored correct password corresponding to the coded lock and clear the correct password.

Specifically, in response to the second verification result being verification passed, the clearing apparatus generates a password clearing instruction, and then sends the password clearing instruction to the vehicle-mounted host, so as to instruct the vehicle-mounted host to obtain the correct password corresponding to the coded lock pre-stored by itself and instruct the vehicle-mounted host to clear the correct password.

This embodiment provides a method for clearing a password of a vehicle-mounted coded lock. In this embodiment, in response to the second verification result being verification passed, a password clearing instruction is generated and sent to the vehicle-mounted host in a timely manner, so as to instruct the vehicle-mounted host to clear the correct password in a timely manner.

### Embodiment 8

This embodiment is a further refinement of any of the above embodiments, and the specific content is as follows.

In response to the first verification result being verification invalid or the second verification result being verification invalid, continuing to obtain the first near field communication information or the second near field communication information, and stopping obtaining the first near field communication information or the second near field communication information when the first verification result or the second verification result is verification passed or verification failed, or when the number of verification invalid occurrences exceeds a preset invalid number, where the first verification result being verification invalid means that the first near field communication information or the second near field communication information is not obtained.

Verification invalid means that the first near field communication information or the second near field communication information is not obtained. It should be noted that the situations where verification invalid occurs include but are not limited to the following: firstly, the target near field communication card is demagnetized; secondly, the target near field communication card is not in good contact with the card reader; thirdly, the near field communication information cannot be obtained temporarily due to program errors.

The preset invalid number refers to the preset number of allowable invalid occurrences. The preset invalid number can be stored in the vehicle-mounted host or the clearing apparatus.

In an implementation, assuming that the preset invalid number is 5, the user places the target near field communication card on the card reader, so that the card reader can collect the information pre-stored in the target near field communication card. However, if for some reason, the card reader fails to collect the near field communication information, the clearing apparatus can send a message that the information is not collected to the vehicle-mounted host, so that the vehicle-mounted host generates a prompt that the information is not collected (where the prompt that the information is collected includes the number of verification invalid occurrences) and displays it on the central control screen, so that the user knows the current collection situation, until the vehicle-mounted host determines that the number of verification invalid occurrences exceeds the preset invalid number, and then the number of verification invalid occurrences exceeding the preset invalid number is displayed on the central control screen to inform the user of the situation; on the other hand, the vehicle-mounted host sends a message of stopping obtaining the first near field communication information or the second near field communication information to the clearing apparatus, so that the clearing apparatus stops obtaining the first near field communication information or the second near field communication information.

This embodiment provides a method for clearing a password of a vehicle-mounted coded lock. This embodiment specifies concrete measures for handling invalid verification scenarios, enabling the clearing apparatus to continue acquiring the first near field communication information or the second near field communication information. However, once the number of invalid verifications exceeds a preset invalid number, acquisition of the first near field communication information or the second near field communication information ceases to conserve processing resources.

In an implementation, the method is applied to a vehicle-mounted host. Before the in response to the user triggering the password-forgotten component, activating the card reader, the method further includes:
obtaining a target password input by the user, where the target password is input by the user in a password input box; in response to the target password being an incorrect password, continuing to display the password input box and the password-forgotten component to instruct the user to continue to input a new target password or trigger the password-forgotten component.

Specifically, the user performs an operation of unlocking the coded lock on the central control screen, a password input box is displayed on the central control screen, then the user inputs a target password in the password input box, and the vehicle-mounted host receives the target password.

Further, the vehicle-mounted host obtains the correct password pre-stored by itself, and matches the correct password with the target password. If the target password is inconsistent with the correct password, the vehicle-mounted host determines that the target password is an incorrect password, so that the vehicle-mounted host instructs the central control screen to continue to display the password input box and the password-forgotten component, and thus the user can continue to input the next target password in the password input box, or the user can directly trigger the password-forgotten component.

The target password refers to the password input by the user on the central control screen.

Alternatively, if the user continuously inputs incorrect target passwords for a preset number of times, locking the password input box and only displaying the password-forgotten component to instruct the user to trigger the password-forgotten component.

Specifically, if the user continuously inputs target passwords in the password input box, and the target password under each round of input is an incorrect password, this results in the user continuously inputting incorrect target passwords for a preset number of times.

The preset number of times refers to a preset number of times of inputting incorrect target passwords. For example, assuming that the preset number of times is 5.

Specifically, the vehicle-mounted host locks the password input box on the central control screen and only displays the password-forgotten component, so that the user can trigger the password-forgotten component.

Locking the password input box refers to disabling the password input box, so that the user cannot input the target password through the password input box. Alternatively, the vehicle-mounted host hides the password input box.

### Embodiment 9

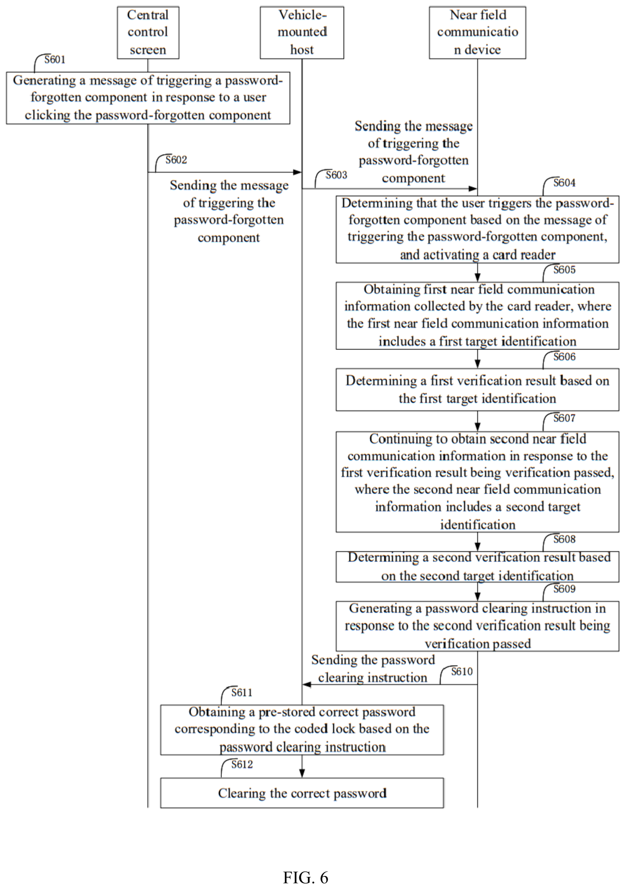

FIG. 6 is a schematic interaction diagram provided in Embodiment 9. The execution subject of this embodiment is a clearing system, which includes a central control screen, a near field communication device and a vehicle-mounted host. As shown in FIG. 6, it specifically includes the following steps.

S601, generating, by the central control screen, a message of triggering a password-forgotten component in response to a user clicking the password-forgotten component.

S602, sending, by the central control screen, the message of triggering the password-forgotten component to a vehicle-mounted host.

S603, sending, by the vehicle-mounted host, the message of triggering the password-forgotten component to the near field communication device.

S604, determining, by the near field communication device, that the user triggers the password-forgotten component based on the message of triggering the password-forgotten component, and activating a card reader.

S605, obtaining, by the near field communication device, first near field communication information collected by the card reader, where the first near field communication information includes a first target identification.

S606, determining, by the near field communication device, a first verification result based on the first target identification.

S607, continuing to obtain, by the near field communication device, second near field communication information in response to the first verification result being verification passed, where the second near field communication information includes a second target identification.

S608, determining, by the near field communication device, a second verification result based on the second target identification.

S609, generating, by the near field communication device, a password clearing instruction in response to the second verification result being verification passed.

S610, sending, by the near field communication device, the password clearing instruction to the vehicle-mounted host.

S611, obtaining, by the vehicle-mounted host, a pre-stored correct password corresponding to the coded lock based on the password clearing instruction.

S612, clearing, by the vehicle-mounted host, the correct password.

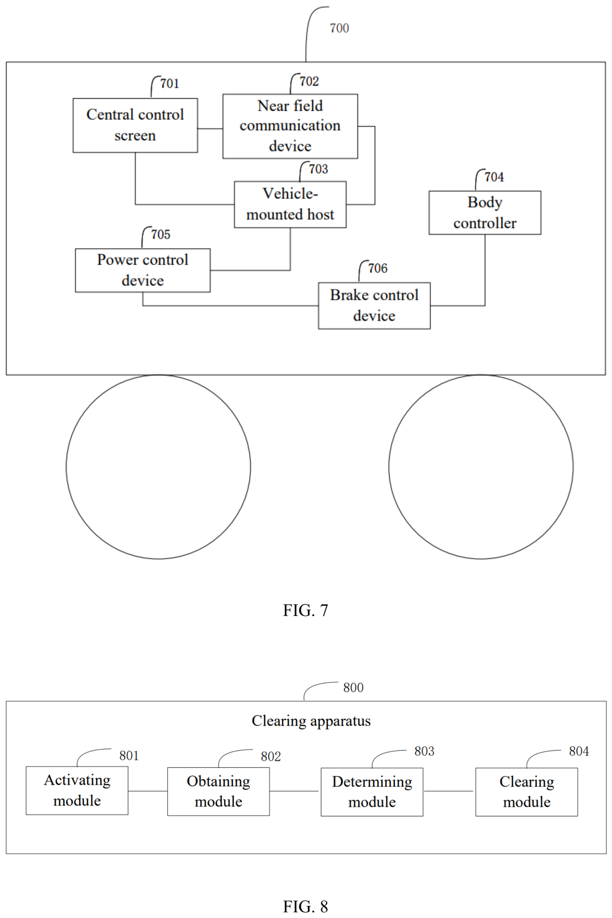

In an implementation, this embodiment provides a schematic diagram of a vehicle system. FIG. 7 is a schematic diagram of a vehicle system provided in Embodiment 9.

As shown in FIG. 7, a vehicle 700 includes a central control screen 701, a near field communication device 702, a vehicle-mounted host 703, a body controller 704, a power control device 705, a brake control device 706 and other devices (not shown in the figure).

The central control screen 701 is connected to the near field communication device 702 and the vehicle-mounted host 703.

The near field communication device 702 is connected to the vehicle-mounted host 703.

The power control device 705 is connected to the vehicle-mounted host 703 and the brake control device 706.

The brake control device 706 is connected to the body controller 704.

The power control device 705 collects vehicle gear signals, acceleration/brake signals, battery voltage signals, etc., performs tracking and monitoring of each component controller, coordinates management, and provides power.

The brake control device 706 realizes discrete control functions and controls a large number of electrical devices.

The body controller 704 is located inside the vehicle body and is responsible for inheriting and controlling multiple systems and devices.

It should be noted that a human-computer interaction system is constructed in the present application, that is, the front-end central control screen and the back-end vehicle-mounted host and the near field communication device.

### Embodiment 10

The following is the apparatus embodiment of the present application. FIG. 8 is a schematic diagram of an apparatus for clearing a password of a vehicle-mounted coded lock provided in Embodiment 10. As shown in FIG. 8, the clearing apparatus 800 includes the following modules:
an activating module 801, configured to activate a card reader in response to a user triggering a password-forgotten component;
an obtaining module 802, configured to obtain first near field communication information, where the first near field communication information is information pre-stored inside a first near field communication card and then collected by the card reader, the first near field communication information includes a first target identification corresponding to the first near field communication card, and the first near field communication card belongs to a target near field communication card;
a determining module 803, configured to determine a first verification result of the first near field communication card based on the first target identification; and
a clearing module 804, configured to clear a pre-stored correct password corresponding to the coded lock based on the first verification result being verification passed and unlock the coded lock, where the coded lock is mounted on a vehicle.

In an implementation, if there is one target near field communication card;
the determining module 803, when determining the first verification result of the first near field communication card based on the first target identification, is specifically configured to:
obtain a preset identification corresponding to a pre-stored preset near field communication card;
if the first target identification matches the preset identification, determine that the first verification result of the first near field communication card is verification passed; and
if the first target identification does not match the preset identification, determine that the first verification result of the first near field communication card is verification failed.

In an implementation, the clearing module 804, when clearing the pre-stored correct password corresponding to the coded lock based on the first verification result being verification passed, is specifically configured to:
in response to the first verification result being verification passed, generate a password clearing instruction, and send the password clearing instruction to a vehicle-mounted host to instruct the vehicle-mounted host to obtain the pre-stored correct password corresponding to the coded lock and clear the correct password.

In an implementation, if there are two target near field communication cards and the target near field communication cards further include a second near field communication card;
the determining module 803, when determining the first verification result of the first near field communication card based on the first target identification, is specifically configured to:
obtain a pre-stored preset identification set, where the preset identification set includes preset identifications corresponding to two preset near field communication cards;
if the first target identification matches one of the preset identifications, determine that the first verification result of the first near field communication card is verification passed; and
if the first target identification does not match any of the preset identifications, determine that the first verification result of the first near field communication card is verification failed.

In an implementation, the clearing module 804, when clearing the pre-stored correct password corresponding to the coded lock based on the first verification result being verification passed, is specifically configured to:
in response to the first verification result being verification passed, continue to obtain second near field communication information, where the second near field communication information includes a second target identification corresponding to the second near field communication card; and
determine a second verification result of the second near field communication card based on the second target identification, clear the pre-stored correct password corresponding to the coded lock based on the second verification result and unlock the coded lock.

In an implementation, the clearing module 804, when determining the second verification result of the second near field communication card based on the second target identification, is specifically configured to:
obtain an other unmatched preset identification in the preset identification set;
if the second target identification matches the other unmatched preset identification, determine that the second verification result of the second near field communication card is verification passed; and
if the second target identification does not match the other unmatched preset identification, determine that the second verification result of the second near field communication card is verification failed.

In an implementation, the clearing module 804, when clearing the pre-stored correct password corresponding to the coded lock based on the second verification result and unlocking the coded lock, is specifically configured to:
in response to the second verification result being verification passed, generate a password clearing instruction, and send the password clearing instruction to a vehicle-mounted host to instruct the vehicle-mounted host to obtain the pre-stored correct password corresponding to the coded lock and clear the correct password.

In an implementation, the obtaining module 802 is further configured to:
in response to the first verification result being verification invalid or the second verification result being verification invalid, continue to obtain the first near field communication information or the second near field communication information, and stop obtaining the first near field communication information or the second near field communication information when the first verification result or the second verification result is verification passed or verification failed, or when the number of verification invalid occurrences exceeds a preset invalid number, where the first verification result being verification invalid means that the first near field communication information or the second near field communication information is not obtained.

### Embodiment 11

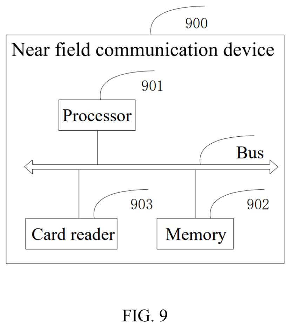

FIG. 9 is a schematic structural diagram of a near field communication device provided in Embodiment 11. As shown in FIG. 9, the near field communication device 900 may include a processor 901, a memory 902 and a card reader 903 that are communicatively connected to the processor 901. The memory 902 stores computer-executable instructions, the card reader 903 is configured to collect information pre-stored inside a target near field communication card, and the processor 901 executes the computer-executable instructions stored in the memory 902 to implement any method embodiment of Embodiments 1 to 9, where the specific implementation manner and technical effect are similar, which will not be repeated here.

In this embodiment, the card reader 903, the memory 902 and the processor 901 are connected through a bus. The bus may be an Industry Standard Architecture (Industry Standard Architecture, abbreviated as ISA) bus, a Peripheral Component Interconnect (Peripheral Component Interconnect, abbreviated as PCI) bus, an Extended Industry Standard Architecture (Extended Industry Standard Architecture, abbreviated as EISA) bus, or the like. The bus can be divided into an address bus, a data bus, a control bus, etc. For ease of representation, only one thick line is used in FIG. 9, but it does not mean that there is only one bus or one type of bus.

### Embodiment 12

The present application provides a computer-readable storage medium, where the computer-readable storage medium stores computer-executable instructions that, when executed by a processor, are used to implement any method embodiment of Embodiments 1 to 9, where the specific implementation manner and technical effect are similar, which will not be repeated here.

### Embodiment 13

The present application provides a computer program product, including a computer program that, when executed by a processor, implements any method embodiment of Embodiments 1 to 9, and the specific implementation manner and technical effect are similar, which will not be repeated here.

In several embodiments provided by the present invention, it should be understood that the disclosed apparatus and method may be implemented in other ways. For example, the apparatus embodiments described above are only illustrative, for example, the division of modules is only a logical function division, and there may be other division methods in actual implementation. For example, multiple modules or components can be combined or integrated into another system, or some features can be ignored or not implemented. In addition, the displayed or discussed mutual coupling or direct coupling or communication connection may be indirect coupling or communication connection through some interfaces, devices or modules, and may be in electrical, mechanical or other forms.

The modules described as separate components may or may not be physically separated, and the components displayed as modules may or may not be physical modules, that is, they may be located in one place, or may be distributed on multiple network modules. Some or all of the modules may be selected according to actual needs to achieve the purpose of the solution of this embodiment.

In addition, each functional module in each embodiment of the present invention may be integrated into one processing module, or each module may exist alone physically, or two or more modules may be integrated into one module. The above integrated modules can be implemented in the form of hardware, or in the form of hardware plus software functional modules.

Program codes for implementing the method of the present invention can be written in any combination of one or more programming languages. These program codes can be provided to the processor or controller of a general-purpose computer, special-purpose computer, or other programmable interrupt processing apparatus, so that when the program codes are executed by the processor or controller, the functions/operations specified in the flowcharts and/or block diagrams are implemented. The program codes can be executed entirely on a machine, partially on the machine, or executed as an independent software package, partially on the machine and partially on a remote machine, or entirely on the remote machine or server.

In the context of the present invention, a machine-readable medium may be a tangible medium that may contain or store a program for use by or in connection with an instruction execution system, apparatus or device. The machine-readable medium may be a machine-readable signal medium or a machine-readable storage medium. The machine-readable medium may include but is not limited to an electronic, magnetic, optical, electromagnetic, infrared, or semiconductor system, apparatus or device, or any suitable combination of the above. More specific examples of the machine-readable storage medium include an electrical connection based on one or more wires, a portable computer disk, a hard disk, a Random Access Memory (RAM), a Read-Only Memory (ROM), an Erasable Programmable Read-Only Memory (EPROM or flash memory), an optical fiber, a portable Compact Disc Read-Only Memory (CD-ROM), an optical storage device, a magnetic storage device, or any suitable combination of the above.

In addition, although the operations are depicted in a specific order, this should be understood as requiring that such operations be performed in the specific order shown or in sequential order, or that all illustrated operations be performed to achieve the desired result. Under certain circumstances, multitasking and parallel processing may be advantageous. Similarly, although several specific implementation details are included in the above discussion, these should not be construed as limiting the scope of the present invention. Certain features described in the context of separate embodiments can also be implemented in combination in a single implementation. Conversely, various features described in the context of a single implementation can also be implemented separately or in any suitable sub-combination in multiple implementations.

Those skilled in the art will easily think of other embodiments of the present application after considering the specification and practicing the invention disclosed herein. The present application is intended to cover any variations, uses, or adaptive changes of the present application, which follow the general principles of the present application and include common knowledge or conventional technical means in the technical field not disclosed in the present application. The specification and embodiments are only regarded as exemplary, and the true scope and spirit of the present application are indicated by the following claims.

It should be understood that the present application is not limited to the precise structure described above and shown in the accompanying drawings, and various modifications and changes can be made without departing from its scope. The scope of the present application is only limited by the appended claims.

## Claims

1. A method for clearing a password of a vehicle-mounted coded lock, wherein the method comprises:
activating a card reader in response to a user triggering a password-forgotten component;
obtaining first near field communication information, wherein the first near field communication information is information pre-stored inside a first near field communication card and then collected by the card reader, the first near field communication information comprises a first target identification corresponding to the first near field communication card, and the first near field communication card belongs to a target near field communication card;
determining a first verification result of the first near field communication card based on the first target identification; and
clearing a pre-stored correct password corresponding to the coded lock based on the first verification result being verification passed, and unlocking the coded lock, wherein the coded lock is mounted on a vehicle.

2. The method according to claim 1, wherein if there is one target near field communication card,
the determining the first verification result of the first near field communication card based on the first target identification comprises:
obtaining a preset identification corresponding to a pre-stored preset near field communication card;
if the first target identification matches the preset identification, determining that the first verification result of the first near field communication card is verification passed; and
if the first target identification does not match the preset identification, determining that the first verification result of the first near field communication card is verification failed.

3. The method according to claim 2, wherein the clearing the pre-stored correct password corresponding to the coded lock based on the first verification result being verification passed comprises:
in response to the first verification result being verification passed, generating a password clearing instruction, and sending the password clearing instruction to a vehicle-mounted host to instruct the vehicle-mounted host to obtain the pre-stored correct password corresponding to the coded lock and clear the correct password.

4. The method according to any one of claims 1 to 3, wherein if there are two target near field communication cards and the target near field communication cards further comprise a second near field communication card,
the determining the first verification result of the first near field communication card based on the first target identification comprises:
obtaining a pre-stored preset identification set, wherein the preset identification set comprises preset identifications corresponding to two preset near field communication cards;
if the first target identification matches one of the preset identifications, determining that the first verification result of the first near field communication card is verification passed; and
if the first target identification does not match any of the preset identifications, determining that the first verification result of the first near field communication card is verification failed.

5. The method according to any one of claims 1 to 4, wherein the clearing the pre-stored correct password corresponding to the coded lock based on the first verification result being verification passed comprises:
in response to the first verification result being verification passed, continuing to obtain second near field communication information, wherein the second near field communication information comprises a second target identification corresponding to the second near field communication card; and
determining a second verification result of the second near field communication card based on the second target identification, clearing the pre-stored correct password corresponding to the coded lock based on the second verification result and unlocking the coded lock.

6. The method according to claim 5, wherein the determining the second verification result of the second near field communication card based on the second target identification comprises:
obtaining an other unmatched preset identification in the preset identification set;
if the second target identification matches the other unmatched preset identification, determining that the second verification result of the second near field communication card is verification passed; and
if the second target identification does not match the other unmatched preset identification, determining that the second verification result of the second near field communication card is verification failed.

7. The method according to claim 5 or 6, wherein the clearing the pre-stored correct password corresponding to the coded lock based on the second verification result and unlocking the coded lock comprises:
in response to the second verification result being verification passed, generating a password clearing instruction, and sending the password clearing instruction to a vehicle-mounted host to instruct the vehicle-mounted host to obtain the pre-stored correct password corresponding to the coded lock and clear the correct password.

8. The method according to any one of claims 1 to 7, wherein the method further comprises:
in response to the first verification result being verification invalid or the second verification result being verification invalid, continuing to obtain the first near field communication information or the second near field communication information, and stopping obtaining the first near field communication information or the second near field communication information when the first verification result or the second verification result is verification passed or verification failed, or when the number of verification invalid occurrences exceeds a preset invalid number, wherein the first verification result being verification invalid means that the first near field communication information or the second near field communication information is not obtained.

9. An apparatus for clearing a password of a vehicle-mounted coded lock, wherein the apparatus comprises:
an activating module, configured to activate a card reader in response to a user triggering a password-forgotten component;
an obtaining module, configured to obtain first near field communication information, wherein the first near field communication information is information pre-stored inside a first near field communication card and then collected by the card reader, the first near field communication information comprises a first target identification corresponding to the first near field communication card, and the first near field communication card belongs to a target near field communication card;
a determining module, configured to determine a first verification result of the first near field communication card based on the first target identification; and
a clearing module, configured to clear a pre-stored correct password corresponding to the coded lock based on the first verification result being verification passed and unlock the coded lock, wherein the coded lock is mounted on a vehicle.

10. A near field communication device, comprising a processor, a memory and a card reader that are communicatively connected to the processor;
wherein the memory stores computer-executable instructions, the card reader is configured to collect information pre-stored inside a target near field communication card, and the processor executes the computer-executable instructions stored in the memory to implement the method according to any one of claims 1 to 8.

11. A computer-readable storage medium, wherein the computer-readable storage medium stores computer-executable instructions that, when executed by a processor, are used to implement the method according to any one of claims 1 to 8.

12. A computer program product comprising a computer program that, when executed by a processor, implements the method according to any one of claims 1 to 8.
